# EUROPEAN PATENT SPECIFICATION

(11) **EP 3 756 841 B1**
(45) Date of publication and mention of the grant of the patent: **28.02.2024**
(21) Application number: 19182067.9
(22) Date of filing: 24.06.2019
(51) Int. Cl.: B26D 7/06, A22B 5/20, B26D 7/02, B26D 1/46

(54) **CUTTING TABLE FOR FROZEN FOOD PRODUCTS**
SCHNEIDETISCH FÜR GEFRORENE LEBENSMITTEL
TABLE DE COUPE POUR PRODUITS ALIMENTAIRES CONGELÉS

(43) Date of publication of application: 30.12.2020
(73) Proprietor: R3M, PACKAGING LDA,, 6200-027 Covihã (PT)
(72) Inventor: Esteves da Palma, Ricardo Jorge, 6200-567 Covilhã (PT)
(74) Representative: Pereira da Cruz, Joao

(56) References cited:
- WO-A1-2018/172864
- CN-A- 105 881 602
- CN-U- 203 993 145
- KR-A- 20190 005 814
- US-A1- 2007 032 185

## Description

### SCOPE AND BACKGROUND OF THE INVENTION

This invention falls within the scope of industrial equipment used in the food industry, namely equipment for supporting and cutting frozen food products.

The equipment designed for cutting food products, more specifically to cut frozen fish and meat into fillets and/or slices have been modernized and optimized in order to allow their integration at an industrial scale, in an effort to comply with the high standards and requirements in terms of performance and safety at work.

Work accidents with frozen products cutting machines continue to pose safety problems, since many of the existing solutions that ensure a greater yield and speed in the operation still work semi-automatically, implying at a certain point the direct intervention of the operator in the cutting operation.

Although occupational health and safety regulations so require, or at least provide a guidance for this purpose, some of the existing means that promote workers safety, such as the use of metal gloves, is often neglected by machine operators due to prolonged contact of the metal with the hands, along with the cold environment which is typical of the cutting rooms.

On the other hand, the existing solutions that guarantee a fully automated operation are provided with complex drive systems, consisting of numerous components and systems of belts and rails and a considerable number of components that in addition to making the structure heavier, do not allow the desired machine speeds to be achieved in this type of industry. Additionally, given its more complex configuration, assembly is generally more time-consuming and adaptation to other industrial equipment is not flexible, thus requiring laborious and error-prone changes.

The patent application publication number CN105881602 discloses a solution that prevents the occurrence of work accidents when cutting the food, the piece to be cut being fed against the saw through a pressing clamp arranged on a work platform, which rests on pulleys that slide transversely to the feeding of the product, this differing from the present invention in that it does not allow a fully automated two-axes movement.

WO 2018172864 A1 discloses A machine for cutting food products, specifically frozen products, into portions or slices, comprising a carriage with support means suitable for whole pieces of food; fastening means prepared to fix the whole piece of food to the support means; and feeding means of the food piece to the cutting tool of the cutting machine;the movable base moving on the platform along a cutting axis X.

The present invention complies with performance requirements, generally consisting in the quality of the cut according to the instructions of the user and the speed both in the feeding and cutting of the products, as well as in the output circuit of the already cut product. In addition to a performance improvement comparatively to other solutions, the present invention is fully automated, allowing its control and operation without the user's direct intervention.

The present invention as is defined in claim 1, consists of a cutting table which is attachable to any machine for cutting frozen products, i.e., it relates to a table comprised of a system for fixing and moving the frozen product in order to be coupled to any machine for cutting frozen products with a band saw. The movement circuit of the cutting table consists of two types of movements, one on the Y-axis, feeding the product towards the saw and the said product being gradually cut off and its length reduced, and another one on the X-axis that makes the cut and the respective return to the start position.

In order to achieve a higher speed of the machine, ensuring the movement in both axes and simultaneously an easier assembly and operation, a solution was sought that avoided the implementation of multiple belts or transmission systems, guides and rails. In addition, a solution was sought that simultaneously solved the problem of the installation space, i.e., in the existing solutions the space required for installation on a platform or support is usually greater, with the height between the base and the support of the workpiece being also bigger, which reduces the actual working space and makes it difficult to access components for cleaning and servicing.

In addition, a conveyor belt for transporting the piece to be cut can be installed in association with the cutting table, wherein an artificial vision system is installed, such as a camera, which assesses the position and dimensions of the product so that it can be grasped by a robot with a specific claw that, with the aid of a second artificial vision system and sensors that measure the weight, analyses the product before placing it on the cutting table, the latter automatically starting the cut movements upon receiving it. The vision systems and weight sensors are connected to a software which manages the cut, calculating the thickness of the slices and/or portions, thus reducing food waste and optimizing the size and/or weight of the same.

Thus, the cutting table which is the object of the present invention implements a solution with the installation of a system aimed at fixing and moving the product to be cut through the implementation of a single transmission belt fed by two motors that are responsible for the movement according to two axes and at an operating speed which corresponds to the desired one.

In short, the present invention contributes to the state of the art with the following advantages:
- a compact system that allows an easy installation in areas with limited space;
- it is attachable to the existing fish supply systems and cutting machines;
- it comprises weight sensors and an artificial vision system that analyses the product and software which manages the cut and reduces waste by optimizing the size and/or weight of the slices and achieving greater product compliance, the latter being marketable at a higher value.
- it is fully automated, thus eliminating the risk of accidents with machine operators.

### SUMMARY OF THE INVENTION

The present invention relates to an automatic table for cutting whole pieces of food products, preferably frozen foods, into portions and/or slices, which is attachable to food cutting machines and is provided with fastening means (3) and (4) of the food product (2) and feeding means (5) of the whole piece of food towards the cutting tool mounted on a movable base (7).

This movable base (7) moves over the platform (1) along a cutting axis Y and the feeding means (5) move along a feeding axis X, perpendicular to the cutting axis Y, the movements according to said axes being performed by means of a single transmission belt (8) fed by two motors (9).

Next to the cutting table which is the object of the present invention, a conveyor belt for transporting the piece to be cut can be installed, wherein an artificial vision system, such as a chamber, is installed, which assesses the position and dimensions of the product so that it can be grasped by a robot with a specific claw that, with the aid of a second artificial vision system and sensors that measure the weight, analyses the product before placing it on the cutting table which, upon receiving it, automatically starts the cutting movements. The vision systems and weight sensors are connected to software that manages the cut, calculating the thickness of the slices and/or portions, thus reducing food waste and optimizing the size and/or weight of the same.

The table can alternatively be supplied manually by the operator by initiating the cutting movement according to the pre-set dimensions only when the cutting space is freed, thus avoiding the risk of injury. The product to be cut is fixed to the cutting table by fastening means (3) and (4) which are adjustable according to the size and shape of the product.

On the platform (1) a system is mounted comprising a single transmission belt (8) moved by two toothed belt pulleys (10) which are driven by two motors (9) and by six support pulleys whose arrangement defines a H-shaped closed circuit of the transmission belt (8), thereby configuring the belt path (8) and also contributing to its movement. In order to enable the mechanical movement of the components responsible for the movement of the whole piece of the food product to be cut, a system of guides arranged coincidently with the closed circuit of the transmission belt (8) is mounted, over which move the movable base (7) and a feeding car (5).

The movements on both axes are carried out by means of the transmission belt (8) and the synchronization of the motors (9), through the following cutting steps:
i. start position to begin the cut aligned with the cutting tool;
ii. a movement in the feeding axis X defining the thickness of the portion or slice to be cut;
iii. a movement in the cutting axis Y that performs the cut;
iv. preferably a backward movement in the axis X so as to avoid contact of the piece of food with the cutting tool;
v. a backward movement in the cutting axis Y towards the position aligned with the cutting tool;
vi. ejection of the last portion to the output conveyor belt (14) via a pneumatic ejector (6), after automatic opening of the rear clamping claw (3).

If the cutting tool is a double-edged blade saw, step iv does not occur in the abovementioned cutting method, i.e., instead of the backward movement in the X-axis, a forward movement is made for cutting the next portion or slice which occurs in the Y-axis backward movement.

### DESCRIPTION OF THE FIGURES

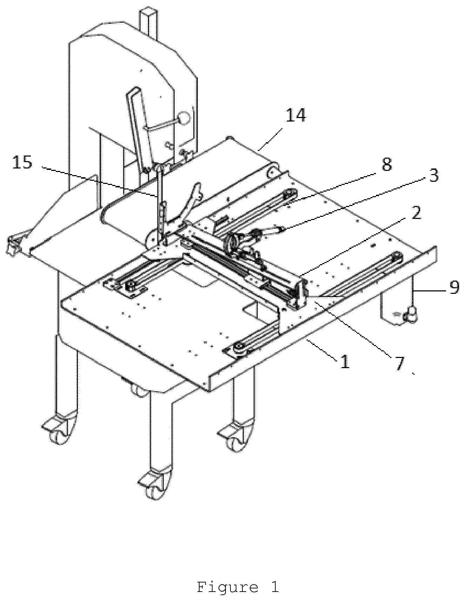

Figure 1 - schematic representation of the cutting table coupled to a cutting machine with a cutting tool (15) for food products, the cutting table comprising an output conveyor belt (14) of the cut product and a platform (1) on which a movable base (7) is installed, wherein are mounted a support rail (2) of the whole piece of the food product and a rear clamping claw (3) for fixing the rear section of the piece of food. The movable base (7) moves on the platform (1) along two axes by means of a transmission belt (8) and two motors (9).

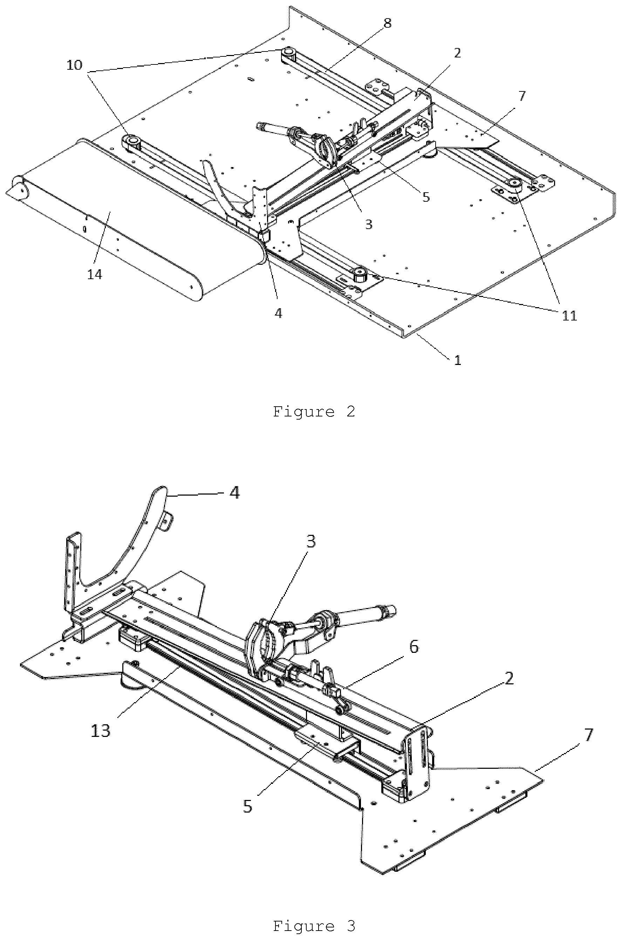

Figure 2 - schematic representation of the cutting table platform (1), on which a movable base (7) is installed, wherein a support rail (2) for the whole piece of food is mounted, the latter being fixed by a rear clamping claw (3) and a front clamping claw (4) and fed towards the saw by a feeding car (5). The movable base (7) moves on the platform (1) along a cutting axis Y and the feeding car (5) along a feeding axis Y and by means of a transmission belt (8) whose movement is transmitted through toothed belt pulleys (10) and support pulleys (11).
Figure 3 - schematic representation of the movable base (7) on which the support rail (2) is mounted, wherein the feeding car (5) and the rear clamping claw (3) are coupled and which move together through the feeding guide (13) mounted on the movable base (7) towards the front clamping claw (4) that is next to the cutting tool. In addition, a pneumatic ejector (6) is coupled to the feeding car which expels the last portion of the food product to the conveyor belt.

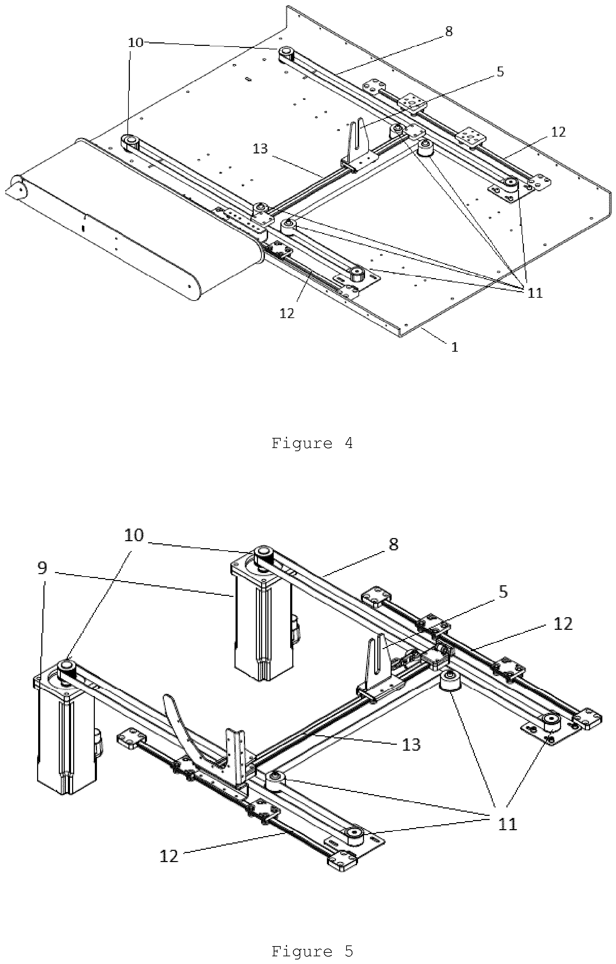

Figure 4 - a detail representation of the closed circuit of the transmission belt (8) mounted on the platform (1), this movement being ensured by means of two toothed belt pulleys (10) and six support pulleys (11) which define the movement configuration. The movable base moves through two linear movement guides (12) mounted on the platform (1) and the feeding car (5) through a feeding guide (13).
Figure 5 - a detail representation of the closed circuit of the transmission belt (8) driven by two motors (9), this movement being ensured by means of two toothed belt pulleys (10) and six support pulleys (11) defining the movement configuration. The movable base moves through two linear movement guides (12) mounted on the platform (1) and the feeding car (5) through a feeding guide (13).

### DETAILED DESCRIPTION OF THE INVENTION

The automatic cutting table for whole pieces of food products, preferably frozen products, into portions or slices, which is the object of the present invention comprises a platform (1) wherein a plurality of components are installed among which a movable base (7), and on which are mounted:
a) support means (2) for whole pieces of food;
b) fastening means (3) and (4) to fix the whole piece of food to the support means (2); and
c) feeding means (5) of the food piece to the cutting tool (15) of the cutting machine;
the movable base (7) moves on the platform (1) along a cutting axis Y and the feeding means (5) move along a feeding axis Y, perpendicular to the cutting axis Y, the movements according to said axes being performed by means of a single transmission belt (8) driven by two motors (9).

The support means (2) of the whole piece of food consist of a support rail (2) disposed substantially perpendicular to the cutting axis Y and to which is coupled a feeding car (5) that moves along a shaft in the support rail (2) by means of a feeding guide (13) mounted on the movable base (7) and conveying together on the support rail (2) :
i. the fastening means (3) for fixing the rear section of the whole piece of food product;
ii. the ejection system (6) connected to the fastening means (3) operated by a pneumatic ejector which expels the last cut portion or slice to an output conveyor belt (14).

The fastening means (3) consists of a rear clamping claw (3) suitable for fixing the rear section of the food piece to be cut, being adjustable to the size of the product by means of a tightening system driven by a pneumatic mechanism.

The whole piece of food is simultaneously fixed or supported on the end which will be exposed to the cutting tool (15) through fastening means (4). The fastening means is a front clamping claw (4) attached to the end of the support rail (2), this claw being adjustable to the size of the product. The adjustment is also carried out by a tightening system by means of screws which close or open the front clamping claw (4), by adding or removing parts according to the size of the product or by a pneumatic or electromechanical mechanism.

The tilt of the support rail (2) is adjustable by means of bolts, or by a pneumatic or electromechanical system, to provide a cutting angle such that the portions and/or slices to be cut have characteristics according to the specifications desired for the final product. For example, in the case of a hake-like fish or similar fish having an approximate conical shape, the adjustment of the cutting angle by adjusting the position of the support rail (2) is essential for the slices to have regular shapes and dimensions.

Thus, the product to be cut is placed on the support rail (2) and fixed through a rear clamping claw (3) and a front clamping claw (4) that are adjustable through a tightening system, according to the size and shape of the product, and whose opening is fixed or adjustable by mechanical or pneumatic means.

This fastening system by means of clamping claws (3) and (4) enables automatic feeding and cutting without the intervention of an operator, thus reducing the work injury risks which commonly occur in this type of activity, such as finger cutting.

The ejection system (6) is located posterior to the rear clamping claw (3) with respect to the direction of the feeding axis X for cutting. This is achieved through a pneumatic ejector which expels the last portion of the food piece to an output conveyor belt (14) of the already cut product, thus avoiding such removal to be made by hand or with the aid of a tool, presenting the advantage of being fully automatic.

It is now important to explain how the movable base (7) is mounted on the table platform (1) so as to cause the sequence of movements to be carried out for cutting the whole piece of a food product, preferably a frozen product.

Thus, a system is mounted on the platform (1) consisting of a single transmission belt (8) moved by two toothed belt pulleys (10) driven by two motors (9) and six support pulleys (11), four central and two opposite the toothed belt pulleys (10), the arrangement of which defines a closed circuit of the "H"-shaped transmission belt (8) which contacts the movable base (7), the transmission belt (8) being fixed to the feeding car (5) propagating the movement.

The distribution of the support pulleys (11) thus configures the trajectory of the belt (8) and enables the movement of the movable base to be perpetuated.

In order to enable the mechanical movement of the components responsible for the movement of the whole piece of food to be cut, a system of guides is arranged coincidently with the closed circuit of the transmission belt (8) and on which move:
i. the movable base (7) in contact with the transmission belt (8) on the central support pulleys (11), along the cutting axis Y through two parallel linear movement guides (12) installed on the platform;
ii. the feeding car (6) to which the transmission belt (8) is attached, along a feeding axis X, through a feeding guide (13), located between the linear movement guides (12) and perpendicular thereto.

The guides system allowing the movement of the movable base (7) and the feeding car (5) of the rear clamping claw (3) is mounted so that its configuration coincides with the movement trajectory of the transmission belt (8), thereby allowing the transmission belt (8) to be fixed to the feeding car (5), moving it. On the other hand, the central support pulleys (11) enable the transmission belt (8) to touch the movable base (7) by transmitting the movement to the movable base (7).

Thus, the linear movement guides (12) are responsible for the trajectory on the cutting axis Y, one guide being located adjacently to the cutting tool and the other on the opposite side, while the linear movement guide (13) is responsible for the trajectory on the feeding axis X of the food piece to be cut.

This system as described presents the advantage of using only a single transmission belt (8) and a much less complex guide and pulley assembly system with a lower number of components. The height of the guide and transmission belt (8) system mounted between the platform (1) and the movable base (7) does not exceed 30 mm, thus leaving more space to operate with food pieces of various dimensions, as well as for a freer circulation of a robot for automated placement of the food onto the support rail (2).

The way the two motors (9) can transmit the power to a single belt creating distinct movements on two axes is due to the synchronization of their movements, so when both motors (9) turn in the same direction the result is a movement in the feeding axis X, and when rotated in opposite directions the result is a movement in the cutting axis Y.

It is now important to explain how the cutting table operates from the arrival of the whole piece of food to be cut, which is preferably a frozen food, until its exiting trajectory.

In the case of manual operation, the food is hand-placed by the operator who will then give the instruction to cut according to specifications defined at the moment.

In the case of automatic operation, a conveyor belt for the transport of the food pieces to be cut is installed in which an artificial vision system, such as a camera, is installed, which assesses the position and dimensions of the product so that it can be grasped by a robot with a specific claw that, with the aid of a second artificial vision system and sensors that measure the weight, analyses the product before placing it on the cutting table. The vision systems and weight sensors are connected to software that manages the cut, calculating the thickness of the slices and/or portions, thus reducing food waste and optimizing the size and/or weight of the same.

In both cases, as soon as the whole piece of food is placed in the support rail (2), it is fixed by means of the rear clamping claw (3) and rests on the front clamping claw (4). The start position for initiating the cut of the whole piece of food is aligned with the cutting tool. It is followed by a first movement on the X-axis, which feeds the food piece towards the cutting tool. This first forward movement in the feeding axis X corresponds to the thickness of the initial trimming which is cut with a movement on the Y-axis to level the top of the food piece for cutting.

After the trimming, a cycle of movements is started which consists of a forward movement in the feeding axis X defining the thickness of the portion and/or slice, a second movement in the cutting axis Y which performs the cut, a backward movement in the X-axis to prevent contact of the food piece with the blade that has just made the cut, protecting it from wear and preserving the previous cut of the food piece and, finally, a backward movement in the cutting axis Y which leaves it ready to make a new cut in the start position.

The previous cycle is different when a double-edged cutting blade is used; in this case, instead of the backward movement in the X-axis, a forward movement is performed in order to cut the next portion or slice, which takes place in the backward movement on the Y-axis.

The thickness of the slices can vary with each cut, so as to provide greater yield or to have slices with approximately the same weight.

As the slices are cut, they fall on an output conveyor belt (14) which carries the food, preventing its accumulation at that point as well as eliminating the need for an operator to remove the food.

When the last cut is made, the rear clamping claw (3) opens and the ejection system (6) ejects the last slice to the output conveyor belt (14).

In the output conveyor belt (14) there may be also a selector system which forwards different types of cut products to different destinations, such as trimmings, regular fillets/slices, and leftovers.

The cutting table can be coupled to the frozen products cutting machines provided with a cutting tool, such as a single or double-edged saw, or other types of saws, also being possible to adapt the movements of the cutting table according to the type of saw.

The components of the cutting table, such as the platform (1), the cutting base (7), the clamping means (3) and (4) and the support means (2), as well as the guides (12) and (13) are made of stainless steel since it is a material resistant to standard washing procedures in the food industry and also to the high wear resulting from the permanent rotation to which the parts are subjected.

The pulleys (10) and (11) are made of nylon because it is a light material with high mechanical strength and resistance to abrasion.

The cutting table can be independent of the machine or an integral part of it; in both cases, the table adapts the speed of movement to the force exerted on the cutting blade in order to adapt to different product densities, freezing status and cutting capacity of the blade.

## Claims

1. A cutting table for a whole piece of food, which is attachable to a machine for cutting food products, preferably frozen products, into portions or slices, comprising a platform (1) of the table wherein a plurality of components are installed, **wherein** among said components it comprises a movable base (7), on which are mounted:
i. support means (2) for whole pieces of food;
ii. fastening means (3,4) prepared to fix the whole piece of food to the support means (2); and
iii. feeding means (5) of the food piece to a cutting tool (15) of said machine for cutting food products; the movable base (7) moves on the platform (1) along a cutting axis Y and the feeding means (5) move along a feeding axis X, perpendicular to the cutting axis Y, wherein said movements are in use performed by means of a single transmission belt (8) driven by two motors (9).

2. A cutting table according to the previous claim, **characterized in that** the support means (2) of the whole piece of food is a support rail (2) disposed substantially perpendicular to the cutting axis Y and to which is coupled a feeding car (5) that moves along a shaft in the support rail (2) by means of a feeding guide (13) mounted on the movable base (7) and conveying together on the support rail (2):
i. the fastening means (3) for fixing the rear section of the whole piece of food product;
ii. an ejection system (6) connected to the fastening means (3) operated by a pneumatic ejector which expels the last cut portion or slice to an output conveyor belt (14).

3. A cutting table according to claim 2, **characterized in that** the tilt of the support rail (2) is adjustable by means of bolts, or by a pneumatic or electromechanical system.

4. A cutting table according to any of the previous claims 2 or 3 **characterized in that** the fastening means (3,4) comprises a front clamping claw (4) attached to the end of the support rail (2) and wherein rests or to which is fixed the end of the whole piece of food exposed to the cutting tool.

5. A cutting table according to the previous claims 2 and 4, **characterized in that** the fastening means (3, 4)further comprises a rear clamping claw (3) and that both the rear clamping claw (3) and the front clamping claw (4) are adjustable to the size of the product by a tightening system, i.e., the rear clamping claw (3) by means of a pneumatic mechanism and the front clamping claw (4) by means of bolts, adding or removing parts, or by a pneumatic or electromechanical mechanism.

6. A cutting table according to any of the previous claims, **characterized in that** on the platform (1) a system is mounted which is comprised of said single transmission belt (8), which is moved by two toothed belt pulleys (10) driven by two motors (9) and six support pulleys (11), four central and two opposite to the toothed belt pulleys (10), the arrangement of which defines a closed circuit of said single transmission belt (8) which is "H"-shaped and a which contacts the movable base (7), said single transmission belt (8) being fixed to the feeding car (5) propagating the movement.

7. A cutting table according to claim 6, **characterized in that** it comprises a system of guides arranged coincidently with the closed circuit of the transmission belt (8) and on which move:
i. the movable base (7) in contact with the transmission belt (8) on the central support pulleys (11), along the cutting axis Y through two parallel linear movement guides (12) installed on the platform;
ii. the feeding car (6) to which the transmission belt (8) is attached, along a feeding axis X, through a feeding guide (13), located between the linear movement guides (12) and perpendicular thereto.

8. A cutting table according to any of the previous claims 2 or 3-7 when dependent from claim 2, **characterized in that** the height of the guides and transmission belt (8) system mounted between the platform (1) and the movable base (7) does not exceed 30 mm.

9. A cutting table according to any of the previous claims, **characterized in that** it comprises an output conveyor belt (14) for the transport of the cut portions and/or slices, which is mounted adjacently to the platform (1) and immediately after the cutting tool (15).

10. A cutting table according to any of the previous claims, **characterized in that** the cutting table is attachable to cutting machines for frozen products and which are provided with a cutting tool (15), such as single or double-edged saws or any other type of saw blades.

11. A cutting table according to any one of the previous claims, **characterized in that** the platform (1) is a movable base (7), and **in that** the fastening means (3, 4), the support means (2) and the guides (12, 13) are made of stainless steel and the pulleys (10,11) are of nylon.

12. A cutting table according to any of the previous claims, **characterized in that** the speed of the cutting table, when attached to a machine for cutting food products, is adaptable to the force exerted on the cutting blade of said machine for cutting food products in order to adapt to different product densities, freezing status and cutting capacity of the blade.

13. Method of cutting a whole piece of food using a cutting table according to one of the claims 1-12 attached to a cutting machine for food products provided with a doubled-edged saw (15) **characterized in that** it comprises the following steps:
i. start position to begin the cut aligned with the cutting tool;
ii. a movement in the feeding axis X defining the thickness of the portion or slice to be cut from the whole piece of food;
iii. a movement in the cutting axis Y that performs the cut;
iv. a backward movement in the cutting axis Y up to the position aligned with said double-edged saw (15)
v. ejection of the last portion to the output conveyor belt (14) via a pneumatic ejector (6), after automatic opening of the rear clamping claw (3).

## Patentansprüche

1. Ein Schneidetisch für eines ganzen Lebensmittelstücks, der an einer Maschine zum Schneiden von Lebensmittelprodukten, vorzugsweise gefrorenen Produkten, in Portionen oder Scheiben angebracht werden kann, umfassend eine Plattform (1) des Tisches, auf der eine Vielzahl von Komponenten installiert sind, **wobei** er unter diesen Komponenten eine bewegliche Basis (7) umfasst, auf der Folgendes montiert sind:
i. Stützmittel (2) für ganze Lebensmittelstücke;
ii. Befestigungsmittel (3, 4), die so beschaffen sind, dass sie des ganzen Lebensmittelstücks an den Stützmittel (2) befestigen; und
iii. Vorschubmittel (5) des Lebensmittelstücks zum Schneidewerkzeug (15) der Maschine zum Schneiden von Lebensmittelprodukten;
die bewegliche Basis (7) sich auf der Plattform (1) entlang einer Schneidachse Y bewegt und die Vorschubmittel (5) sich entlang einer Vorschubachse X senkrecht zur Schneidachse Y bewegen, wobei diese Bewegungen im Gebrauch mittels eines einzigen Transmissionsriemens (8) ausgeführt werden, der von zwei Motoren (9) angetrieben wird.

2. Schneidetisch nach dem vorhergehenden Anspruch, **dadurch gekennzeichnet, dass** die Stützmittel (2) des ganzen Lebensmittelstücks eine Stützschiene (2) ist, die im Wesentlichen senkrecht zur Schneidachse Y angeordnet ist und an die ein Vorschubwagen (5) gekoppelt ist, der sich entlang einer Welle in der Stützschiene (2) mittels einer Vorschubführung (13) bewegt, die auf der beweglichen Basis (7) montiert ist und gemeinsam auf der Stützschiene (2) transportiert:
i. die Befestigungsmittel (3) zur Fixierung des hinteren Teils des ganzen Lebensmittelstücks;
ii. ein Auswurfsystem (6), das mit den Befestigungsmitteln (3) verbunden ist und durch einen pneumatischen Auswerfer betätigt wird, der den letzten geschnittenen Portion oder die letzte Scheibe auf ein Ausgangsförderband (14) auswirft.

3. Schneidtisch nach Anspruch 2, **dadurch gekennzeichnet, dass** die Neigung der Stützschiene (2) mittels Bolzen oder durch ein pneumatisches oder elektromechanisches System einstellbar ist.

4. Schneidetisch nach einem der Ansprüche 2 oder 3, **dadurch gekennzeichnet, dass** die Befestigungsmittel (3, 4) eine vordere Klemmklaue (4) umfassen, die am Ende der Stützschiene (2) angebracht ist und auf der das Ende des ganzen Lebensmittelstücks, das dem Schneidwerkzeug ausgesetzt ist, ruht oder an der es befestigt ist.

5. Schneidtisch nach einem der Ansprüche 2 oder 4, **dadurch gekennzeichnet, dass** die Befestigungsmittel ferner eine hintere Klemmklaue (3) umfassen und dass sowohl die hintere Klemmklaue (3) als auch die vordere Klemmklaue (4) durch ein Spannsystem auf die Größe des Produkts einstellbar sind, d.h. die hintere Klemmklaue (3) durch einen pneumatischen Mechanismus und die vordere Klemmklaue (4) durch Schrauben, Hinzufügen oder Entfernen von Teilen oder durch einen pneumatischen oder elektromechanischen Mechanismus.

6. Schneidtisch nach einem der vorhergehenden Ansprüche, **dadurch gekennzeichnet, dass** auf der Plattform (1) ein System montiert ist, das aus dem einzigen Transmissionsriemen (8), der durch zwei von zwei Motoren (9) angetriebene Zahnriemenscheiben (10) bewegt wird, und sechs Stützrollen (11) besteht, vier in der Mitte und zwei gegenüber den Zahnriemenscheiben (10), deren Anordnung einen geschlossenen Kreislauf des einzigen Transmissionsriemens (8) definiert, der die Form eines "H" hat und die bewegliche Basis (7) berührt, wobei der einzige Transmissionsriemen (8) an dem Vorschubwagen (5) befestigt ist, der die Bewegung überträgt.

7. Schneidtisch nach Anspruch 6, **dadurch gekennzeichnet, dass** er ein System von Führungen umfasst, die in Übereinstimmung mit dem geschlossenen Kreislauf des Transmissionsriemens (8) angeordnet sind und sich darauf bewegen:
i. die bewegliche Basis (7) in Kontakt mit dem Transmissionsriemen (8) auf den zentralen Stützrollen (11), entlang der Schneidachse Y durch zwei parallele lineare Bewegungsführungen (12), die auf der Plattform installiert sind;
ii. den Vorschubwagen (6), an dem der Transmissionsriemen (8) befestigt ist, entlang einer Vorschubachse X durch eine Vorschubführung (13), die sich zwischen den lineare Bewegungsführungen (12) und senkrecht zu diesen befindet.

8. Schneidtisch nach einem der vorhergehenden Ansprüche 2 oder 3-7, wenn sie von Anspruch 2 abhängig sind, **dadurch gekennzeichnet, dass** die Höhe des zwischen der Plattform (1) und der beweglichen Basis (7) montierten Führungs- und Transmissionsriemen Systems (8) 30 mm nicht überschreitet.

9. Schneidtisch nach einem der vorhergehenden Ansprüche, **dadurch gekennzeichnet, dass** er ein Ausgangsförderband (14) für den Transport der geschnittenen Portionen und/oder Scheiben umfasst, das neben der Plattform (1) und unmittelbar nach dem Schneidwerkzeug (15) angebracht ist.

10. Schneidetisch nach einem der vorhergehenden Ansprüche, **dadurch gekennzeichnet, dass** der Schneidetisch an Schneidemaschinen für gefrorene Produkte angebracht werden kann, die mit einem Schneidewerkzeug (15), wie z.B. ein- oder zweischneidigen Sägen oder jeder anderen Art von Sägeblättern, versehen sind.

11. Schneidtisch nach einem der vorhergehenden Ansprüche, **dadurch gekennzeichnet, dass** die Plattform (1) eine bewegliche Basis (7) ist, und dass die Befestigungsmittel (3, 4), die Stützmittel (2) und die Führungen (12, 13) aus Edelstahl und die Rollen (10, 11) aus Nylon sind.

12. Schneidetisch nach einem der vorhergehenden Ansprüche, **dadurch gekennzeichnet, dass** die Geschwindigkeit des Schneidetisches, wenn er an einer Maschine zum Schneiden von Lebensmitteln angebracht ist, an die auf die Schneideklinge der Maschine zum Schneiden von Lebensmitteln ausgeübte Kraft anpassbar ist, um sich an unterschiedliche Produktdichten, Gefrierzustände und Schneidekapazität der Klinge anzupassen.

13. Verfahren zum Schneiden eines ganzen Lebensmittelstücks unter Verwendung eines Schneidetisches nach einem der Ansprüche 1-12, der an einer Schneidemaschine für Lebensmittelprodukte angebracht ist, die mit einer doppelseitigen Säge (15) versehen ist, **dadurch gekennzeichnet, dass** es die folgenden Schritte umfasst:
i. Startposition, um den Schnitt ausgerichtet auf das Schneidewerkzeug zu beginnen;
ii. eine Bewegung in der Vorschubachse X, die die Dicke der Portion oder Scheibe bestimmt, die von dem ganzen Lebensmittelstück abgeschnitten werden soll;
iii. eine Bewegung in der Schneidachse Y, die den Schnitt ausführt;
iv. eine Rückwärtsbewegung in der Schneidachse Y bis zu der Position, die mit der doppelseitigen Säge (15) ausgerichtet ist;
v. Auswurf der letzten Portion auf das Ausgangsförderband (14) über einen pneumatischen Auswerfer (6), nach automatischer Öffnung der hinteren Klemmklaue (3) .

## Revendications

1. Table de coupe pour un morceau entier d'aliment, laquelle peut être fixée à une machine pour couper des produits alimentaires, de préférence des produits congelés, en portions ou tranches, comprenant une plateforme (1) de la table où sont installés une pluralité de composants, lesdits composants incluant une base mobile (7), sur laquelle sont montés :
i. un moyen de support (2) pour des morceaux entiers d'aliments ;
ii. des moyens de fixation (3, 4) conçus pour fixer le morceau entier d'aliment au moyen de support (2) ; et
iii. un moyen d'alimentation (5) du morceau d'aliment à l'outil de coupe (15) de ladite machine pour couper des produits alimentaires ;
la base mobile (7) se déplace sur la plateforme (1) le long d'un axe de coupe Y et le moyen d'alimentation (5) se déplace le long d'un axe d'alimentation X, perpendiculaire à l'axe de coupe Y, lesdits mouvements étant effectués au moyen d'une courroie de transmission unique (8) entraînée par deux moteurs (9).

2. Table de coupe selon la revendication précédente, **caractérisée en ce que** le moyen de support (2) du morceau entier d'aliment est un rail de support (2) disposé sensiblement perpendiculairement à l'axe de coupe Y et auquel est couplé un chariot d'alimentation (5) qui se déplace le long d'un arbre dans le rail de support (2) au moyen d'un guide d'alimentation (13) monté sur la base mobile (7) et transportant ensemble sur le rail de support (2) :
i. le moyen de fixation (3) pour fixer la partie arrière du morceau entier d'aliment ;
ii. un système d'éjection (6) relié au moyen de fixation (3) actionné par un éjecteur pneumatique qui expulse la dernière portion ou tranche coupée vers une bande transporteuse de sortie (14).

3. Table de coupe selon la revendication 2, **caractérisée en ce que** l'inclinaison du rail de support (2) est réglable au moyen de boulons, ou par un système pneumatique ou électromécanique.

4. Table de coupe selon l'une quelconque des revendications 2 ou 3, **caractérisée en ce que** les moyens de fixation (3, 4) comprennent une griffe de serrage avant (4) fixée à l'extrémité du rail de support (2) et sur laquelle repose ou à laquelle est fixée l'extrémité du morceau entier d'aliment exposée à l'outil de coupe.

5. Table de coupe selon l'une quelconque des revendications 2 ou 4, **caractérisée en ce que** les moyens de fixation comprennent en outre une griffe de serrage arrière (3) et **en ce que** la griffe de serrage arrière (3) et la griffe de serrage avant (4) sont toutes deux ajustables à la taille du produit par un système de serrage, c'est-à-dire la griffe de serrage arrière (3) au moyen d'un mécanisme pneumatique et la griffe de serrage avant (4) au moyen de boulons, en ajoutant ou en enlevant des pièces, ou par un mécanisme pneumatique ou électromécanique.

6. Table de coupe selon l'une quelconque des revendications précédentes, **caractérisée en ce que** sur la plateforme (1) est monté un système composé de ladite courroie de transmission unique (8) qui est déplacée par deux poulies à courroie dentée (10) entraînées par deux moteurs (9) et six poulies de support (11), quatre centrales et deux opposées aux poulies à courroie dentée (10), dont la disposition définit un circuit fermé de ladite courroie de transmission unique (8) qui est en forme de H et qui entre en contact avec la base mobile (7), ladite courroie de transmission unique (8) étant fixée au chariot d'alimentation (5), propageant le mouvement.

7. Table de coupe selon la revendication 6, **caractérisée en ce qu'**elle comprend un système de guides disposés en coïncidence avec le circuit fermé de la courroie de transmission (8) et sur lesquels se déplacent :
i. la base mobile (7) en contact avec la courroie de transmission (8) sur les poulies de support centrales (11), le long de l'axe de coupe Y à travers deux guides parallèles de mouvement linéaire (12) installés sur la plateforme ;
ii. le chariot d'alimentation (5) auquel la courroie de transmission (8) est fixée, le long d'un axe d'alimentation X, à travers un guide d'alimentation (13) situé entre les guides de mouvement linéaire (12) et perpendiculairement à ceux-ci.

8. Table de coupe selon l'une des revendications précédentes 2 ou 3 à 7 lorsqu'elles dépendent de la revendication 2, **caractérisée en ce que** la hauteur du système de guides et de courroies de transmission (8) monté entre la plateforme (1) et la base mobile (7) n'excède pas 30 mm.

9. Table de coupe selon l'une quelconque des revendications précédentes, **caractérisée en ce qu'**elle comprend une bande transporteuse de sortie (14) pour le transport des portions et/ou tranches coupées, qui est montée de façon adjacente à la plateforme (1) et immédiatement après l'outil de coupe (15).

10. Table de coupe selon l'une quelconque des revendications précédentes, **caractérisée en ce que** la table de coupe peut être fixée à des machines de coupe de produits congelés qui sont dotées d'un outil de coupe (15), tel que des scies à simple ou double tranchant ou tout autre type de lames de scie.

11. Table de coupe selon l'une quelconque des revendications précédentes, **caractérisée en ce que** la plateforme (1) est une base mobile (7), et **en ce que** les moyens de fixation (3, 4), le moyen de support (2) et les guides (12, 13) sont en acier inoxydable et les poulies (10, 11) sont en nylon.

12. Table de coupe selon l'une quelconque des revendications précédentes, **caractérisée en ce que** la vitesse de la table de coupe, lorsqu'elle est fixée à une machine de coupe de produits alimentaires, est adaptable à la force exercée sur la lame de coupe de ladite machine de coupe de produits alimentaires, afin de s'adapter aux différentes densités de produits, à l'état de congélation et à la capacité de coupe de la lame.

13. Procédé pour couper un morceau entier d'aliment à l'aide d'une table de coupe selon l'une des revendications 1 à 12 fixée à une machine de coupe de produits alimentaires munie d'une scie à double tranchant (15), **caractérisé en ce qu'**il comprend les étapes suivantes :
i. une position de départ pour commencer la coupe alignée avec l'outil de coupe ;
ii. un mouvement sur l'axe d'alimentation X définissant l'épaisseur de la portion ou de la tranche à couper à partir du morceau entier d'aliment ;
iii. un mouvement sur l'axe de coupe Y qui effectue la coupe ;
iv. un mouvement en arrière sur l'axe de coupe Y jusqu'à la position alignée avec ladite scie à double tranchant (15) ;
v. l'éjection de la dernière portion vers la bande transporteuse de sortie (14) par l'intermédiaire d'un éjecteur pneumatique (6), après l'ouverture automatique de la griffe de serrage arrière (3).
